(19) Europäisches Patentamt
European Patent Office
Office européen des brevets

(11) Veröffentlichungsnummer: **0 160 622**
**A2**

(12) # EUROPÄISCHE PATENTANMELDUNG

(21) Anmeldenummer: 85810192.6

(22) Anmeldetag: 29.04.85

(51) Int. Cl.[4]: C 08 G 59/18
C 08 G 59/16, C 08 G 59/40
C 08 G 59/62, C 08 G 59/68

(30) Priorität: 02.05.84 US 606007

(43) Veröffentlichungstag der Anmeldung: 06.11.85 Patentblatt 85/45

(84) Benannte Vertragsstaaten: CH DE FR GB IT LI NL

(71) Anmelder: CIBA-GEIGY AG
Postfach
CH-4002 Basel(CH)

(72) Erfinder: Gannon, John A.
7 Elmcrest Drive
Danbury Connecticut 06810(US)

(72) Erfinder: Harradine, Alfred J.
2040 Allan Avenue
Yorktown Heights New York 10598(US)

(54) **Zusammensetzungen enthaltend vorverlängerte Epoxidharzester.**

(57) Beschrieben wurden Zusammensetzungen enthaltend vorverlängerte Epoxidharzester. Besagte Ester weisen im wesentlichen keine terminalen Epoxidgruppen auf und sie weisen im wesentlichen nicht veresterte sekundäre Alkoholreste in der Polymerkette auf. Die Ester werden hergestellt, indem man gleichzeitig ein flüssiges Epoxidharz, ein Bisphenol und eine Monocarbonsäure miteinander umsetzt, oder indem man in einem Zweistufenprozess zunächst die Säure und das Epoxidharz miteinander reagieren lässt, und nachfolgend das Bisphenol einsetzt. Bei diesen Umsetzungen entspricht die Summe der Aequivalente von Bisphenol und Monocarbonsäure der Gesamtheit der Aequivalente des flüssigen Epoxidharzes.

Die Ester zeichnen sich durch niedrige Lösungsviskositäten aus und lassen sich daher in Lackformulierungen mit hohem Feststoffanteil einsetzen. Die erfindungsgemässen Zusammensetzungen enthalten neben besagten Estern noch einen Härter und ein Lösungsmittel.

Ein weiterer Verwendungszweck besagter Ester ist der Einsatz als Strassenmarkierungsfarbe.

EP 0 160 622 A2

CIBA-GEIGY AG
Basel (Schweiz)

3-14855/-/CGC 1080

# Zusammensetzungen enthaltend vorverlängerte Epoxidharzester

Die vorliegende Erfindung betrifft Zusammensetzungen enthaltend vorverlängerte lineare Epoxidharzester, die im wesentlichen frei von Epoxidgruppen sind, die im wesentlichen frei sind von veresterten sekundären Alkoholgruppen sind, und die organische Lösungen mit niedriger Viskosität ergeben. Besagte Ester sind insbesondere verwendbar in Lacken mit einem hohen Feststoffanteil.

Epoxidharzester sind wohlbekannte Verbindungen. Die Säuren, die zur Umsetzung mit der Epoxidgruppe eingesetzt werden, sind entweder gesättigt oder ungesättigt.

Das herkömmliche Verfahren zur Herstellung von Epoxidharzestern ist beispielsweise von H.Lee und K.Neville im "Handbook of Epoxy Resins" (Mc. Graw Hill, New York, 1967, S. 24-19 bis 21) beschrieben.

Nach dieser Methode wird zunächst ein flüssiges Epoxidharz unter Einsatz eines Bisphenols vorverlängert, wobei ein polymerer mehrwertiger Alkohol entsteht. Anschliessend wird dieser Alkohol durch Umsetzung mit einer Carbonsäure verestert. Eine nachfolgende oder gleichzeitig verlaufende Umsetzung mit einem Bisphenol, mit der Absicht, den Epoxidharzester zu einem linearen Produkt, das weitestgehend frei von Epoxidgruppen ist, und das zu Lösungen mit niedriger Viskosität führt, zu verlängern, wird nicht erwähnt.

Im US-Patent 3,410,773 wird die galvanische Beschichtung leitfähiger Substrate mit ungesättigten vorverlängerten Epoxidharzestern beschrieben. Die dort verwendeten Ester werden durch einstufige Umsetzung eines flüssigen Epoxidharzes mit Bisphenol A und eines Teils der benötigten Fettsäure erhalten. In einer zweiten Stufe wird eine zusätzliche Menge an Fettsäure mit dem Produkt umgesetzt. Die Ester, die nach diesem Verfahren erhalten werden, sind jedoch nicht nur an den terminalen Epoxidgruppen verestert, sondern auch an den Hydroxylgruppen innerhalb des Moleküls. Bei den hier beschriebenen Epoxidharzestern sind hingegen die sekundären Alkoholgruppen im wesentlichen frei und nicht durch Veresterung blockiert.

In der US-PS 4,413,015 werden unter anderem vorverlängerte Epoxidharzester beschrieben. Diese Verbindungen werden in einer Folgereaktion mit Anhydriden von Polycarbonsäuren umgesetzt. Man erhält auf diese Weise wasserlösliche Harze, die sich insbesondere zum Beschichten von Metallsubstraten eignen.

In der vorliegenden Erfindung werden Zusammensetzungen enthaltend flüssige vorverlängerte Epoxidharzester bereitgestellt. Diese Ester werden durch gleichzeitig ablaufende Kettenverlängerung und Endgruppenverkappung erhalten. Dabei werden ein flüssiges Epoxidharz, ein Bisphenol und eine Monocarbonsäure in Gegenwart eines Katalysators für die einzelnen Reaktionen miteinander umgesetzt und es entsteht ein vorverlängertes lineares Esterprodukt mit sekundären Alkoholresten und frei von Epoxidgruppen. Die einzelnen Reaktanden sind in solchen Mengen vorhanden, das die Gesamtheit der Aequivalente von Bisphenol und Säure den Aequivalenten an flüssigem Epoxidharz entsprechen.
Die vorverlängerten linearen Ester, die Bestandteile der Zusammensetzungen der vorliegenden Erfindung sind, unterscheiden sich von herkömmlichen Epoxidestern in der Weise, dass die sekundären Alkoholgruppen, die in den wiederkehrenden Einheiten der Polymerkette auftreten, nicht verestert sind, d.h., dass die gesamte Veresterung an den terminalen Epoxidfunktionen stattgefunden hat.

Die oben beschriebene Methode der Vorverlängerungsreaktion führt zu mehreren Vorteilen:

1) Die Kettenverlängerungsreaktion ist strikt linear, d.h., sie ist frei von Verzweigungsreaktionen. Solche Verzweigungsreaktionen treten in der Regel kurz vor dem Ende der Verlängerungsreaktion auf, indem die Epoxidgruppe zufällig mit sekundären Alkoholgruppen eine Nebenreaktion eingeht.

2) die Molekulargewichtsverteilung des gebildeten Esters ist relativ scharf, d.h., der Quotient $\bar{M}_w/\bar{M}_n$ ist relativ klein. Der gebildete

Ester enthält im wesentlichen keine hohen Gewichtsmittel-Molekulargewichtsanteile, die zur hohen Viskosität von Lösungen beitragen.

3) Das vorverlängerte lineare Esterprodukt ist stabil hinsichtlich einer Viskositätsänderung bei längerem Erhitzen, da keine aktiven Endgruppen vorkommen, die mit den sekundären Alkoholresten in der Hauptkette reagieren könnten.

Die vorliegende Erfindung betrifft also eine Zusammensetzung enthaltend

A) einen vorverlängerten linearen Epoxidharzester, der im wesentlichen keine Epoxidgruppen enthält, der im wesentlichen keine veresterten sekundären Alkoholgruppen enthält und der zu organischen Lösungen mit einer niedrigen Viskosität führt, und der die Formel I besitzt

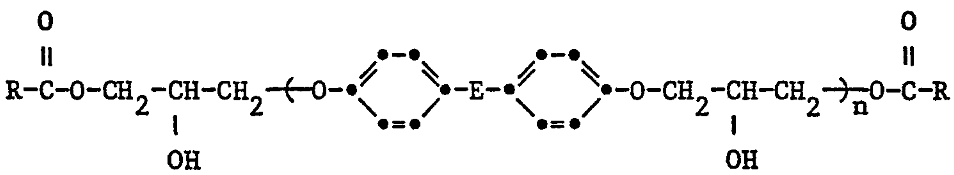

(I),

worin R der Rest einer Monocarbonsäure ist, ausgewählt aus der Gruppe bestehend aus Alkansäuren mit 6 bis 18 Kohlenstoffatomen, hydrierter Abietinsäure, Benzoesäure, p-tert.-Butylbenzoesäure, 2,2-Bis-(hydroxymethyl)-propionsäure, sowie Mischungen dieser Säuren, worin E eine direkte C-C-Bindung darstellt oder Methylen oder $C_2$-$C_6$-Alkyliden ist, oder -O-, -CO-, -S-, -SO-, $-SO_2-$ oder -S-S- bedeutet, worin n eine Zahl von 3 bis 25 ist, wobei besagte Verbindung der Formel I hergestellt wird durch gleichzeitiges Umsetzen von

a) einem flüssigen Epoxidharz der Formel II

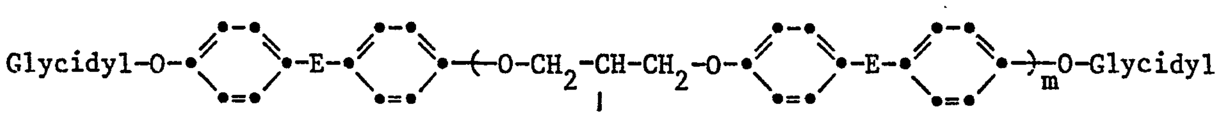

(II),

worin m 0 bis 2 bedeutet,

b) einem Bisphenol der Formel III

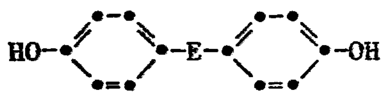 (III),

und

c) einer Monocarbonsäure oder einer Mischung von Monocarbonsäuren der Formel IV

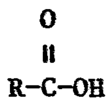 (IV),

wobei die Gesamtheit der Aequivalente des Bisphenols b) und der Säure c) im wesentlichen den Epoxidaequivalenten der Komponente a) gleichen, und worin für jeweils 1000 Gewichtsteile an Epoxidharz a) die Gewichtsteile von Bisphenol b) sich nach der Formel

$$\frac{1000 * (E_i - E_f)}{\text{Aequivalente Bisphenol/kg} + E_f}$$

berechnen, und die Gewichtsteile der Säure c) sich nach der Formel

$$\text{Aequivalentgewicht der Säure} * \frac{(1000 + \text{Gewichtsteile Bisphenol}) * E_f}{1000}$$

berechnen, wobei $E_i$ der anfängliche Epoxidwert des Epoxidharzes a) in Aequivalenten/kg ist, und wobei $E_f$ der gewünschte Epoxidwert für das vorverlängerte Produkt in Aequivalenten/kg bedeutet, wobei die Umsetzung bei Temperaturen zwischen 120 und 200°C in Gegenwart eines Katalysators durchgeführt wird; und enthaltend

B) die wirksame Menge eines Härters, der mit den sekundären Alkoholresten der Komponente A) reagiert und der ausgewählt ist aus der Gruppe bestehend aus di- und polyfunktionellen Isocyanaten,

Melamin-Formaldehyd Harzen, Harnstoff-Formaldehyd Harzen und Phenol-Formaldehyd Harzen, und enthaltend
C) ein organisches Lösungsmittel.

Ferner betrifft die Erfindung eine Zusammensetzung enthaltend
A) einen vorverlängerten linearen Epoxidharzester, der im wesentlichen keine Epoxidgruppen enthält, der im wesentlichen keine veresterten sekundären Alkoholgruppen enthält und der zu organischen Lösungen mit einer niedrigen Viskosität führt, und der die Formel I besitzt

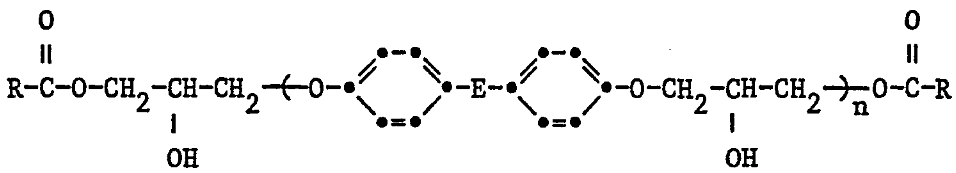
(I),

worin R der Rest einer Monocarbonsäure ist, ausgewählt aus der Gruppe bestehend aus Alkansäuren mit 6 bis 18 Kohlenstoffatomen, hydrierter Abietinsäure, Benzoesäure, p-tert.-Butylbenzoesäure, 2,2-Bis-(hydroxymethyl)-propionsäure, sowie Mischungen dieser Säuren, worin E eine direkte C-C-Bindung darstellt oder Methylen oder $C_2$-$C_6$-Alkyliden ist, oder -O-, -CO-, -S-, -SO-, $-SO_2-$ oder -S-S- bedeutet, worin n eine Zahl von 3 bis 25 ist, wobei besagte Verbindung der Formel I hergestellt wird durch Umsetzen von
a) einem flüssigen Epoxidharz der Formel II

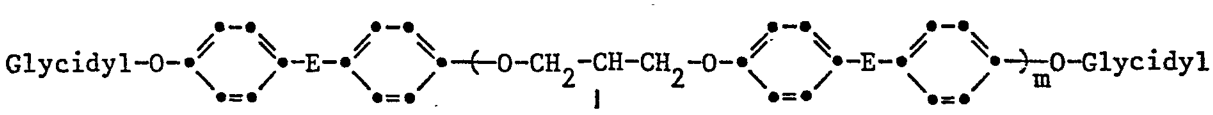
(II),

worin m 0 bis 2 bedeutet, und

b) einer Monocarbonsäure der Formel IV oder einer Mischung besagter Säuren

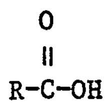
(IV),

wobei pro Epoxidaequivalent des flüssigen Epoxidharzes a) von 0,05 bis 0,5 Aequivalente der Säure IV eingesetzt werden, und wobei ein teilweise verestertes Epoxidharz entsteht, das in einer anschliessenden Reaktion mit

c) einem Bisphenol der Formel

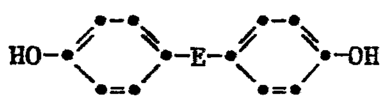

(III)

umgesetzt wird, wobei die Gesamtheit der Aequivalente der Säure b) und des Bisphenols c) im wesentlichen den Epoxidaequivalenten der Komponente a) gleichen, und worin für jeweils 1000 Gewichtsteile an Epoxidharz a) die Gewichtsteile von Bisphenol c) sich nach der Formel

$$\frac{1000 * (E_i - E_f)}{\text{Aequivalente Bisphenol/kg} + E_f}$$

berechnen, und die Gewichtsteile der Säure b) sich nach der Formel

$$\text{Aequivalentgewicht der Säure} * \frac{(1000 + \text{Gewichtsteile Bisphenol}) * E_f}{1000}$$

berechnen, wobei $E_i$ der anfängliche Epoxidwert des Epoxidharzes a) in Aequivalenten/kg ist, und wobei $E_f$ der gewünschte Epoxidwert für das vorverlängerte Produkt in Aequivalenten/kg bedeutet, wobei die Umsetzung bei Temperaturen zwischen 120 und 200°C in Gegenwart eines Katalysators durchgeführt wird, und enthaltend

B) die wirksame Menge eines Härters, der mit den sekundären Alkoholresten der Komponente A) reagiert und der ausgewählt ist aus der Gruppe bestehend aus di- und polyfunktionellen Isocyanaten, Melamin-Formaldehyd Harzen, Harnstoff-Formaldehyd Harzen und Phenol-Formaldehyd Harzen, und enthaltend
C) ein organisches Lösungsmittel.

Bei den Epoxidharzestern A) handelt es sich nicht um lufttrocknende Substanzen, da sich der Rest R von einer $C_6$-$C_{18}$-Alkansäure, von hydrierter Abietinsäure, von Benzoesäure, von p-tert.Butylbenzoesäure oder von 2,2-Bis-(hydroxymethyl)-propionsäure, sowie von Mischungen dieser Säuren ableitet.
Vorzugsweise leitet sich der Rest R von $C_6$-$C_{18}$Alkansäuren ab. Beispiele für solche Säuren sind 2-Ethylhexansäure, eine Mischung von $C_9$-$C_{11}$tert.Alkansäuren, die unter dem Namen "VERSATIC® 911" im Handel erhältlich ist (Fa. Shell), Capronsäure, Laurinsäure, Myristinsäure, Palmitinsäure oder Stearinsäure. Besonders bevorzugt sind Reste R, die sich von Mischungen dieser Säuren ableiten.
Insbesondere bevorzugt wird R als Rest der Laurinsäure.
Bei den bevorzugten Bisphenolen und den flüssigen Epoxidharzen, die sich davon ableiten, handelt es sich bevorzugt um Verbindungen, worin E Methylen oder Isopropyliden ist, ganz besonders bevorzugt jedoch Isopropyliden.
Die Monocarbonsäuren, die Bisphenole und die flüssigen Epoxidharze, die als Ausgangsmaterialien zur Herstellung der vorverlängerten Epoxidharzester verwendet werden, sind an sich bekannt und teilweise im Handel erhältlich.

Die jeweilige Herstellungsmethode der Epoxidharzester bestimmt deren Eigenschaften. Die erhaltenen Produkte sind nicht identisch, obgleich sie von gleichen Ausgangsmaterialien, die in vergleichbaren Mengenverhältnissen vorliegen, erhalten werden.
Je nach Herstellungsmethode des Epoxidesters ändert sich das Molekulargewicht des Produktes und dessen Molekulargewichtsverteilung. Solche Unterschiede im Molekulargewicht und in der Molekulargewichtsverteilung können direkt mit Unterschieden in den physikalischen Eigenschaften des Endproduktes korreliert werden.

Somit kann durch das Herstellungsverfahren kontrolliert werden, ob sich ein bestimmter Ester für einen konkreten Zweck, beispielsweise zur Herstellung einer Lackformulierung mit hohem Feststoffgehalt, eignet oder nicht.

Ueberraschenderweise lassen sich also durch blosses Aendern des Herstellungsverfahrens weitreichende Effekte im physikalischen Erscheinungsbild des Esters erreichen. Im folgenden werden drei prinzipielle Verfahrensweisen zur Herstellung von Epoxidharzestern beschrieben:

Verfahren A

Durchführung eines Zweistufenverfahrens. Man setzt das Epoxidharz zunächst mit einem Bisphenol um, um eine Vorverlängerung durchzuführen. Anschliessend verestert man die übrigen reaktiven Gruppen im Harz durch Umsetzung mit einer Monocarbonsäure.
Diese Methode ist das konventionelle Verfahren zur Herstellung von Epoxidharzestern, wie es beispielsweise im oben erwähnten Buch von Lee und Neville beschrieben ist.

Verfahren B

Hierbei handelt es sich um einen Einstufenprozess, worin das Epoxidharz, das Bisphenol und die Säure gleichzeitig miteinander umgesetzt werden. Dabei entspricht die Summe der Aequivalente der Säure und des Bisphenols im wesentlichen den Aequivalenten des eingesetzten Epoxidharzes. Man erhält einen vorverlängerten linearen Epoxidharzester.

Verfahren C

Hierbei handelt es sich wieder um einen Zweistufenprozess. Zunächst wird das Epoxidharz mit einer gewissen Menge Säure umgesetzt. Dabei wird ein Teil der Epoxidgruppen verestert; ein weiterer Teil bleibt jedoch unreagiert. Anschliessend wird das Produkt mit einem Bisphenol umgesetzt, wobei die Gesamtzahl der eingesetzten Aequivalente von Säure und Bisphenol im wesentlichen der Menge der Aequivalente des Epoxidharzes entspricht. Man erhält einen linearen vorverlängerten Epoxidharzester.
In den nachfolgend beschriebenen Experimenten werden Epoxidharzester vom "4"-Typ (Definition s. unten) mit identischen Ausgangsmaterialien nach dem Verfahren B oder C hergestellt.

Nach der Umsetzung werden jeweils die Molekulargewichte der Produkte (Gewichts- und Zahlenmittel), sowie deren Molekulargewichtsverteilung ($\bar{M}_w/\bar{M}_n$=D) mit Hilfe der Gel-Permeationschromatographie ermittelt. Ausserdem werden die Blasenviskositäten von 40%igen Lösungen der jeweiligen Produkte in Butylcarbitol (Diethylenglykol-Monobutylether) gemessen (gemäss ASTM D-1545). Die Resultate findet man in der nachfolgenden Tabelle I*):

| Messmethode | Herstellungs-verfahren B | Herstellungs-verfahren C |
|---|---|---|
| Blasenviskosität (Gardner-Holdt)<br>(Stokes) | T-U<br>5,7-6,3 | O-P<br>3,8-4,0 |
| $\bar{M}_w$ | $1,4\cdot10^4$ | $9,4\cdot10^3$ |
| $\bar{M}_n$ | $1,8\cdot10^3$ | $1,9\cdot10^3$ |
| $D = \bar{M}_w/\bar{M}_n$ | 7,7 | 4,9 |

*) Die Ester dieser Tabelle wurden durch Umsetzung von 2,2-Bis-4-glycidyloxyphenyl)-propan mit einem Epoxidaequivalent von 0,52-0,55 Ae/100g, von 2,2-Bis-(4-hydroxyphenyl)-propan und von Laurinsäure erhalten; vergl. Beispiele 1 und 2.

Die Auswertung der Daten in dieser Tabelle führt zu der Erkenntnis, dass Ester, die nach dem Verfahren B und insbesondere nach dem Verfahren C erhalten wurden, relativ niedrige Molekulargewichte und auch enge Molekulargewichtsverteilungen besitzen. Das führt zu geringen Lösungsviskositäten. Diese Kombination von Eigenschaften führt zu der leichten und praktischen Verwendbarkeit dieser Ester beim Einsatz in Lacken mit hohem Feststoffanteil; dabei werden die Eigenschaften des entstehenden Ueberzugs nicht nachteilig beeinflusst.

Bei der Herstellung der Epoxidharzester kann eine Vielzahl von Katalysatoren eingesetzt werden. Dazu zählen beispielsweise Alkalimetallhydroxide, wie beispielsweise Natrium- oder Kaliumhydroxid; basische Salze, wie beispielsweise Natriumcarbonat, Lithiumcarbonat, Kaliumcarbonat, Calciumcarbonat; oder Naphthenate, wie beispielsweise Lithiumnaphthenat, Cobaltnaphthenat; oder Zinnsalze, wie beispielsweise Zinnoctanoat; oder Imidazole, wie beispielsweise das 2-Methylimidazol; oder Phosphoniumsalze, wie beispielsweise das Formylmethyltriphenylphosphoniumiodid oder das entsprechende Bromid oder Chlorid sowie das Ethyltriphenylphosphoniumacetat.
Bevorzugte Katalysatoren sind Natriumcarbonat oder Formylmethyltriphenylphosphonium-chlorid.

Die einzusetzende Menge an Katalysator beträgt in der Regel 0,005 bis 1 Gew.%, bezogen auf die Epoxidharzkomponente, besonders bevorzugt werden 0,01 bis 0,5 Gew.% an Katalysator.

Zur Durchführung der Verfahren B und C werden das Epoxidharz, wie beispielsweise das 2,2-Bis-(4-glycidyloxyphenyl)-propan, mit einer Säure und einem Bisphenol umgesetzt, wobei die Summe der Aequivalente der Säure und des Bisphenols dem Anteil der Aequivalente des Epoxidharzes gleicht.

Die absoluten Werte für die Zahl der einzusetzenden Epoxidharzaequivalente und der relative Anteil der Säure und des Bisphenols hängen vom Typ des gewünschten Endproduktes, d.h. vom Ausmass der gewünschten Vorverlängerung, ab.
Die Ester in den Zusammensetzungen der vorliegenden Erfindung, die durch Verfahren B oder C hergestellt werden, besitzen in der Regel ein Zahlenmittel des Molekulargewichts von 1000 bis 7000, das bedeutet n-Werte (Formel I) zwischen 3 und 25. Diese Verbindungen haben Schmelzpunkte von etwa 65° bis zu etwa 155°C.
Die Ester gehören zu den Standard-Typen von Epoxidharzen, die als "1"-Typen und fortlaufend bis zu "10"-Typen bezeichnet werden.
Der n-Wert bezeichnet das Ausmass der Vorverlängerung des ursprünglich eingesetzten Epoxidharzes. Für 2,2-Bis-(4-glycidyloxyphenyl)-propan selbst ist dieser n-Wert 0.

In der nachfolgenden Tabelle II sind näherungsweise n-Werte für die entsprechenden Typen von Epoxidharzen aufgelistet. Ausserdem sind dort die mittleren Epoxidwerte der Harztypen angegeben.

Tabelle II:

| Typ Epoxidharz *) | n-Wert | mittlerer Epoxidwert (Aequivalente/100 g) |
|---|---|---|
| 1 | 3 | 0,206 |
| 2 | 3,5 | 0,162 |
| 4 | 5 | 0,103 |
| 7 | 12 | 0,055 |
| 9 | 23 | 0,033 |

*) Diese Werte basieren auf Epoxidharzen, die sich von Bisphenol A ableiten.

Obgleich die Werte der Lösungsviskositäten von Epoxidharzen bzw. von Epoxidharzestern über weite Bereiche variabel sind, lassen sich eindeutige Trends im Verlauf der Lösungsviskositäten erkennen.
In der nachfolgenden Tabelle III sind typische Blasenviskositäten für Epoxidharze der Typen "1", "4", "6", "7" und "9", sowie für Epoxidharzester, die nach einer der Methoden B oder C aus besagten Epoxidharztypen hergestellt wurden, angegeben.

Tabelle III: Typische Blasenviskositäten von Epoxidharzen *)

| Typ Epoxidharz | Epoxidharz<br><br>Viskositätswerte nach Gardner-Holdt oder (Stokes) | Epoxidharzester hergestellt nach Verfahren B oder C **)<br>Viskositätswerte nach Gardner-Holdt oder (Stokes) |
|---|---|---|
| 1 | D - G (1,0 - 1,7) | D - F (2,8 - 3,0) |
| 4 | P - U (4,0 - 6,3) | J (2,5) |
| 6 | U - X (6,3 - 13) | K - L (2,8 - 3,0) |
| 7 | X - $Z_2$ (13 - 37) | W - $Z_1$ (12 - 29) |
| 9 | $Z_2$-$Z_5$ (37 - 95) | $Z_1$-$Z_3$ (29 - 47) |

*) Die Viskositätswerte werden nach ASTM D-1545 an Lösungen von Harzen bzw. veresterten Harzen, die sich vom Bisphenol A ableiten, gemessen. Die Lösungen enthalten einen Harzanteil von 40 Gew.%; das Lösungsmittel ist Butylcarbitol. Die Messtemperatur beträgt 25°C.

**) Ester, die nach Verfahren B hergestellt wurden, weisen in der Regel etwas höhere Lösungsviskositäten auf als Ester desselben Typs, die nach Methode C hergestellt wurden.

Die folgenden Gleichungen sollen die Berechnungen deutlich machen, die nötig sind, wenn man einen Epoxidharzester mit einem definierten n-Wert herstellen will, d.h., eine definierte Vorverlängerung erreichen will. Dazu werden die benötigten Anteile von Bisphenol und Säure berechnet, die man verwenden muss, um das gewünschte Ergebnis zu erreichen.

Die folgenden Berechungen gehen von der Annahme aus, das 1000 g (oder Gewichtsteile)von 2,2-Bis-(glycidyloxyphenyl)-propan als Epoxidharzkomponente eingesetzt werden.

$$\text{Einzusetzende Menge an Bisphenol} = \frac{1000 * (E_i - E_f)}{\text{Aequivalente Bisphenol/kg} + E_f}$$

$E_i$ ist dabei der anfängliche Epoxidwert des einzusetzenden Epoxidharzes (in Aequivalenten/kg)

$E_f$ ist der gewünschte Epoxidwert des vorverlängerten Epoxidesterendproduktes (in Aequivalenten/kg)

$$\text{Einzusetzende Menge an Säure} = \frac{(1000 + \text{eingesetzte Menge an Bisphenol}) * E_f}{1000} * \text{Säureaequivalentgewicht}$$

Diese Berechnungen werden in dem nachfolgenden konkreten Beispiel verdeutlicht, bei dem unterschiedliche Mengen an Epoxidharz, Bisphenol und Säure ermittelt werden, um einen Ester vom "1"-Typ herzustellen (vgl. auch Herstellungsbeispiel 4).

Die Harze vom "1"-Typ besitzen Epoxidwerte von ungefähr 2,00 Aequ./kg (vgl. Tabelle II). Daher ist $E_f$ hier 2,00 Aequivalente/kg.

$E_i$ für 2,2-Bis-(4-glycidyloxyphenyl)-propan beträgt 5,35 Aequivalente/kg.

1 kg Bisphenol A enthält 8,77 Aequivalente.

Das Aequivalentgewicht von Laurinsäure ist 200.

Um einen Ester vom "1"-Typ herzustellen, wobei von den oben definierten Komponenten ausgegangen werden soll, müssen daher auf 1000 g einzusetzenden Epoxidharzes folgende Mengen an Bisphenol A und an Laurinsäure verwendet werden:

$$\text{Menge an Bisphenol A} = \frac{1000 * (5{,}35 - 2{,}00)}{8{,}77 + 2{,}00} \text{ (g)} = 311 \text{ (g)}.$$

$$\text{Menge an Laurinsäure} = \frac{(1000 + 311) * 2{,}00}{1000} * 200 \text{ (g)} = 524 \text{ (g)}$$

| | | |
|---|---|---|
| Epoxidharz : | 1000 g | (5,35 Aequivalente) |
| Bisphenol A : | 311 g | (2,73 Aequivalente) |
| Laurinsäure : | 524 g | (2,62 Aequivalente). |

Die hauptsächlischsten Vorteile, die die nach Methode B oder C hergestellten Ester aufweisen, sind die niedrigen Lösungsviskositäten von Lösungen enthaltend besagte Produkte. Man kann damit wie gesagt Lackformulierungen mit hohem Feststoffanteil (sogenannte High-Solid Lacke) herstellen.
Die Verwendung von Bisphenol A zur Vorverlängerung eines flüssigen Epoxidharzes und die gleichzeitige Mitverwendung eines Teils einer Fettsäuremenge in einer Stufe und die nachfolgende Umsetzung der restlichen Fettsäuremenge in einer zweiten Stufe ist im US-Patent 3,410,773 beschrieben worden. In diesem Patent ist die Veresterungsreaktion jedoch nicht auf die Epoxidendgruppen beschränkt, sondern sie umfasst auch zusätzlich die Hydroxylgruppen in der Kette des Epoxidharzes.

Die vorliegenden Epoxidester werden ausgehend von flüssigen Epoxidharzen hergestellt.

Dies ist ein weiterer Unterschied zur "klassischen" Methode der Herstellung von Epoxidharzestern, in der ein festes, vorverlängertes Epoxidharz mit der Fettsäure umgesetzt wird, wobei sowohl die terminalen Epoxidgruppen als auch die Hydroxylgruppen in der Kette reagieren. Diese Reaktion ist, wie gesagt, im Handbuch von Lee und Neville beschrieben.
Ein weiterer nicht zu übersehender Vorteil der erfindungsgemäss einzusetzenden Ester I, bei denen in der Vorverlängerungsreaktion nur die terminalen Epoxidgruppen involviert sind, ist die Stabilität des Materials bei Anwendungen, wobei besagtes Material als Thermoplast eingesetzt wird. So wird beispielsweise bei Strassenmarkierungen die Farbe durch Erhitzen auf die Strassenoberfläche aufgebracht. Dabei liegt das Harz in geschmolzener Form vor. In der Regel führt eine solche Behandlung zu zusätzlicher Kettenverlängerung des geschmolzenen Produktes (bei Temperaturen von bis zu 232°C); somit ist eine obere Verwendungsdauer der geschmolzenen Farbe vorgegeben. Im Gegensatz dazu bleiben die hier beschriebenen Epoxidharzester stabil, wenn sie für längere Zeit bei erhöhter Temperatur gehalten werden. Dadurch wird die Anwendung dieser Verbindungen stark vereinfacht und ihr praktischer Wert steigt.

Die Erfindung betrifft daher auch ein Verfahren zum Aufbringen einer thermoplastischen Strassenmarkierungsfarbe umfassend folgende Verfahrensschritte:
I) Erhitzen eines vorverlängerten linearen Epoxidharzesters auf eine Temperatur oberhalb seines Schmelzpunktes, wobei besagter Ester im wesentlichen keine Epoxidgruppen und im wesentlichen keine veresterten sekundären Alkoholgruppen enthält, wobei besagter Ester die Formel I besitzt

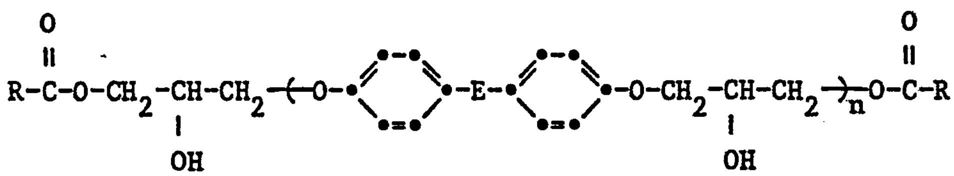
(I),

worin R der Rest einer Monocarbonsäure ist, ausgewählt aus der Gruppe bestehend aus Alkansäuren mit 6 bis 18 Kohlenstoffatomen, hydrierter Abietinsäure, Benzoesäure, p.tert.Butylbenzoesäure, 2,2-Bis-(hydroxymethyl)-propionsäure, sowie Mischungen dieser Säuren, worin E eine direkte C-C-Bindung darstellt oder Methylen oder $C_2$-$C_6$Alkyliden ist, oder -O-, -CO-, -S-, -SO-, $-SO_2-$ oder -S-S- bedeutet, worin n eine Zahl von 3 bis 25 ist, wobei besagte Verbindung der Formel I hergestellt wird durch gleichzeitiges Umsetzen von
a) einem flüssigen Epoxidharz der Formel II

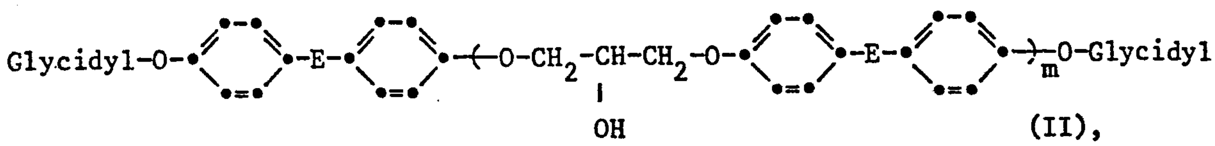
(II),

worin m 0 bis 2 bedeutet,

b) einem Bisphenol der Formel III

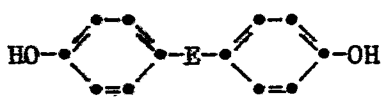 (III),

und

c) einer Monocarbonsäure oder einer Mischung von Monocarbonsäuren der Formel IV

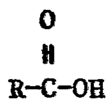 (IV),

wobei die Gesamtheit der Aequivalente des Bisphenols b) und der Säure c) im wesentlichen den Epoxidaequivalenten der Komponente a) gleichen, und worin für jeweils 1000 Gewichtsteile an Epoxidharz a) die Gewichtsteile von Bisphenol b) sich nach der Formel

$$\frac{1000 * (E_i - E_f)}{\text{Aequivalente Bisphenol/kg} + E_f}$$

berechnen, und die Gewichtsteile der Säure c) sich nach der Formel

$$\text{Aequivalentgewicht der Säure} * \frac{(1000 + \text{Gewichtsteile Bisphenol}) * E_f}{1000}$$

berechnen, wobei $E_i$ der anfängliche Epoxidwert des Epoxidharzes a) in Aequivalenten/kg ist, und wobei $E_f$ der gewünschte Epoxidwert für das vorverlängerte Produkt in Aequivalenten/kg bedeutet, wobei die Umsetzung bei Temperaturen zwischen 120 und 200°C in Gegenwart eines Katalysators durchgeführt wird; und

II) Halten besagten thermoplastischen Esters in geschmolzenem Zustand für längere Zeit auf erhöhter Temperatur, wobei keine weitere Vorverlängerung oder Gelierung besagten Esters erfolgt, und

III) Aufbringen des thermoplastischen Esters in geschmolzenem Zustand auf die Strassenoberfläche.

Ausserdem betrifft die Erfindung ein Verfahren zum Aufbringen einer thermoplastischen Strassenmarkierungsfarbe umfassend folgende Verfahrensschritte:

I) Erhitzen eines kettenverlängerten linearen Epoxidharzesters auf eine Temperatur oberhalb eines Schmelzpunktes, wobei besagter Ester im wesentlichen keine Epoxidgruppen und im wesentlichen keine veresterten sekundären Alkoholgruppen enthält, wobei besagter Ester die Formel I besitzt

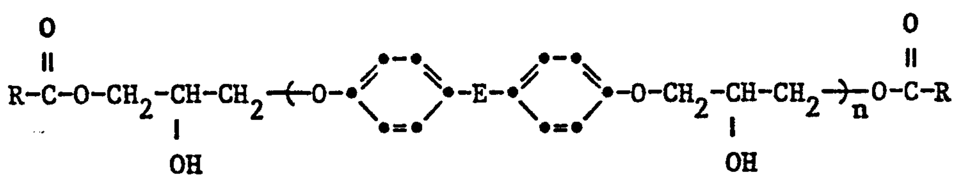
(I),

worin R der Rest einer Monocarbonsäure ist, ausgewählt aus der Gruppe bestehend aus Alkansäuren mit 6 bis 18 Kohlenstoffatomen, hydrierter Abietinsäure, Benzoesäure, p-tert.-Butylbenzoesäure, 2,2-Bis-(hydroxymethyl)-propionsäure, sowie Mischungen dieser Säuren, worin E eine direkte C-C-Bindung darstellt oder Methylen oder $C_2$-$C_6$-Alkyliden ist, oder -O-, -CO-, -S-, -SO-, $-SO_2-$ oder -S-S- bedeutet, worin n eine Zahl von 3 bis 25 ist, wobei besagte Verbindung der Formel I hergestellt wird durch Umsetzen von

a) einem flüssigen Epoxidharz der Formel II

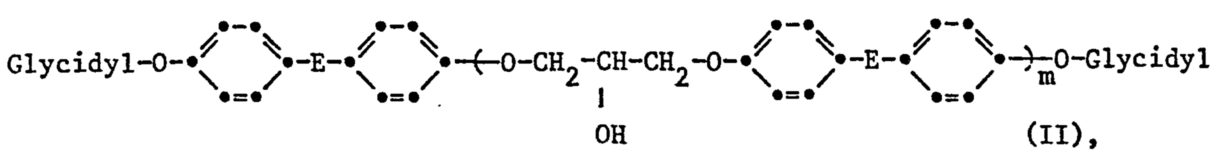
(II),

worin m 0 bis 2 bedeutet, und

b) einer Monocarbonsäure der Formel IV oder einer Mischung besagter Säuren

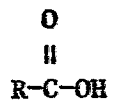

(IV),

wobei pro Epoxidaequivalent des flüssigen Epoxidharzes a) von 0,05 bis 0,5 Aequivalente der Säure IV eingesetzt werden, und wobei ein teilweise verestertes Epoxidharz entsteht, das in einer anschliessenden Reaktion mit

c) einem Bisphenol der Formel III

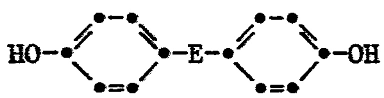

(III),

umgesetzt wird, wobei die Gesamtheit der Aequivalente der Säuren b) und des Bisphenols c) im wesentlichen den Epoxidaequivalenten der Komponente a) gleichen, und worin für jeweils 1000 Gewichtsteile an Epoxidharz a) die Gewichtsteile von Bisphenol c) sich nach der Formel

$$\frac{1000 * (E_i - E_f)}{\text{Aequivalente Bisphenol/kg} + E_f}$$

berechnen, und die Gewichtsteile der Säure b) sich nach Formel

$$\text{Aequivalentgewicht der Säure} * \frac{(1000 + \text{Gewichtsteile Bisphenol}) * E_f}{1000}$$

berechnen, wobei $E_i$ der anfängliche Epoxidwert des Epoxidharzes a) in Aequivalenten/kg ist, und wobei $E_f$ der gewünschte Epoxidwert für das vorverlängerte Produkt in Aequivalenten/kg bedeutet, wobei die Umsetzung bei Temperaturen zwischen 120 und 200°C in Gegenwart eines Katalysators durchgeführt wird; und

II) Halten besagten thermoplastischen Esters in geschmolzenem Zustand für längere Zeit auf erhöhter Temperatur, wobei keine weitere Vorverlängerung oder Gelierung besagten Esters erfolgt, und

III) Aufbringen des thermoplastischen Esters in geschmolzenem Zustand auf die Strassenoberfläche.

Ein weiterer vorteilhafter Aspekt der vorliegenden vorverlängerten Epoxidharzester ist bei der Herstellung von festen Harzen für Pulverlacke zu sehen. Bei einem solchen Prozess wird das geschmolzene Harz in der Regel nach der Vorverlängerungsreaktion allmählich in eine gekühlte Trommel gepumpt. Darin wird es zu Flocken zerkleinert, um gut verarbeitbar zu sein.

Bei einem solchen Prozess treten in der Regel Veränderungen im Epoxidaequivalentgewicht auf (es erfolgt eine weitergehende Reaktion der terminalen Gruppen mit sekundären Alkoholresten). Deshalb muss dieser Verarbeitungsschritt rasch ausgeführt werden, um vorgegebene Spezifikationen einzuhalten (Epoxidaequivalent, Viskosität).
Die vorstehend beschriebenen Epoxidharzester werden während des Flockungszyklus merklich weniger in ihren Eigenschaften beeinflusst. Man kann also sehr enge Spezifikationsgrenzwerte für besagte Pulverlacke vorgeben und auch erreichen.
Die Härtung der vorliegenden Epoxidharzester kann durch Umsetzung der sekundären Alkoholgruppen erfolgen, beispielsweise durch Umsetzung mit di- oder polyfunktionellen Isocyanaten, mit Melamin-Formaldehydharzen, mit Harnstoff-Formaldehydharzen, mit Phenol-Formaldehydharzen oder mit anderen herkömmlichen Härtungsmitteln.

<u>Beispiele 1-2:</u> Es werden Epoxidharzester vom "4"-Typ hergestellt, indem jeweils die gleichen Ausgangsmaterialien verwendet werden, wobei die Umsetzung nach jeweils einer der oben beschriebenen Methoden B oder C erfolgt.
Die Ausgangsmaterialien und deren Mengen sind nachfolgend aufgeführt:
2,2-Bis-(4-glycidyloxyphenyl)-propan (0,531 Aequivalente/100g): 1000 g
2,2-Bis-(4-hydroxyphenyl)-propan (Bisphenol A) : 441 g

| | |
|---|---|
| Laurinsäure | : 288 g |
| Natriumcarbonat (Katalysator) | : 0,25 g |

Verfahren B (Beispiel 1)

Das Epoxidharz, Bisphenol A, Laurinsäure und der Katalysator werden zusammen in einen 2 Literkolben gegeben, der mit Rührer und Stickstoffeinlass ausgerüstet ist. Die Mischung wird auf 150°C erhitzt. Es setzt keine exotherme Reaktion ein. Die Temperatur der Mischung wird dann auf 175°C gesteigert und dort gehalten, bis der Epoxidwert einer homogenen Probe 0,006 Aequivalente/100 g beträgt.
Das so erhaltene Endprodukt hat eine Säurezahl von 0,0003.

Verfahren C (Beispiel 2)

Das Epoxidharz, Laurinsäure und der Katalysator werden in einen 2 Literkolben gegeben, der mit Rührer und Stickstoffeinlass ausgerüstet ist. Die Mischung wird auf 150°C erhitzt und für 1 Stunde auf dieser Temperatur gehalten. Danach zeigt eine homogene Probe einen Epoxidwert von 0,305 Aequivalenten/100 g. Anschliessend gibt man das Bisphenol A zu der Mischung und steigert die Temperatur auf 175°C. Es wird bei dieser Temperatur reagieren gelassen, bis der Epoxidwert einer homogenen Probe 0,009 Aequivalente/100 g beträgt.
Das so erhaltende Endprodukt hat eine Säurezahl von 0,0004.
Blasenviskosität, Molekulargewichtszahlenmittel, Molekulargewichtsmittel und Molekulargewichtsverteilung dieser beiden Epoxidharztypen sind bereits weiter oben in Tabelle I gezeigt worden.

Beispiel 3: Herstellung von Epoxidharzestern des Typs "1"

Analog zur generellen Verfahrensweise des Beispiels 2 werden folgende Ausgangsmaterialien eingesetzt:

| | |
|---|---|
| 2,2-Bis-(4-glycidyloxyphenyl)-propan (Epoxidaequivalent : 0,531 Aequ./100 g): | : 543 g |
| 2,2-Bis-(4-hydroxyphenyl)-propan (Bisphenol A) | : 171 g |
| Laurinsäure | : 286 g |
| Formylmethyltriphenylphosphonium-chlorid (Katalysator) | : 0,27 g |

Ein Vierhalsrundkolben, ausgerüstet mit Rührer, Thermometer und Stickstoffeinlassrohr wird mit Epoxidharz, Laurinsäure und der Hälfte der Katalysatormenge beschickt. Die Mischung wird auf 175°C erhitzt und eine Stunde lang auf dieser Temperatur gehalten. Anschliessend wird der Kolbeninhalt auf 130 - 135°C heruntergekühlt und Bisphenol A zusammen mit der zweiten Hälfte des Katalysators wird zugesetzt. Eine exotherme Reaktion setzt ein. Diese Reaktion wird zusätzlich durch Erwärmen unterstützt und der Kolbeninhalt wird auf 175°C erhitzt.
Diese Temperatur wird gehalten, bis der Epoxidwert 0,01 Aequivalente/ 100 g beträgt und die Säurezahl kleiner als 1 ist.
Das Produkt wird anschliessend filtriert und isoliert.
Die Blasenviskosität einer 40%igen (Gewicht) Lösung dieses Esters in Butylcarbitol beträgt bei 25°C D - E Einheiten auf der Gardner Skala oder 1,0 - 1,25 Einheiten auf der Stokes Skala.

Beispiele 4-5: Herstellung von Epoxidharzestern des Typs "7"
Analog zur generellen Verfahrensweise des Beispiels 2 werden folgende Ausgangsmaterialien eingesetzt:

| Beispiel: | 4 | 5 |
|---|---|---|
| 2,2-Bis-(4-glycidyloxyphenyl)-propan (Epoxidaequivalent: 0,531 Aequ./100 g) | : 598 g | 603 g |
| Bisphenol A | : 311 g | 323 g |
| Laurinsäure | : 91 g | 74 g |
| Formylmethyltriphenylphosphonium-chlorid(Katalysator) | :0,30 g | 0,30 g |

Ein Vierhalsrundkolben, ausgerüstet mit Rührer, Thermometer und Stickstoffeinlassrohr wird mit Epoxidharz, Laurinsäure und der Hälfte der Katalysatormenge beschickt. Die Mischung wird auf 175°C erhitzt und eine Stunde lang auf dieser Temperatur gehalten. Anschliessend wird der Kolbeninhalt auf 130 - 135°C heruntergekühlt und Bisphenol A zusammen mit der zweiten Hälfte des Katalysators zugesetzt. Eine exotherme Reaktion setzt ein. Diese Reaktion wird zusätzlich durch Erwärmen unterstützt und der Kolbeninhalt wird auf 175°C aufgeheizt.

Diese Temperatur wird gehalten, bis der Epoxidwert der Mischung 0,01 Aequivalente/100 g beträgt und bis die Säurezahl kleiner als 1 ist.
Anschliessend wird das Produkt filtriert und isoliert.

In der folgenden Tabelle V sind die Blasenviskositäten von 40%igen (Gewicht) Lösungen der hergestellten Ester in Butylcarbitol bei 25°C aufgeführt.

Tabelle V:

| Beispiel | 4 | 5 |
|---|---|---|
| Viskosität (Gardner-Holdt) | W - X | Y |
| Viskosität (Stokes) | 12-13 | 18 |

Beispiele 6-7: In den Beispielen 6 - 7 werden Lösungsviskositäten und Eigenschaften der ausgehärteten Epoxidharzester ermittelt. Dabei handelt es sich wiederum um Ester des "4"-Typs, die nach einer der Methoden B oder C hergestellt wurden. Dazu verwendet man jeweils identische Ausgangsmaterialien und molare Verhältnisse und variiert lediglich die Art der Herstellung, wie in Beispiel 1 bzw. 2 beschrieben. Ausgangsmaterialien sind 2,2-Bis-(4-glycidyloxyphenyl)-propan, Bisphenol A und Laurinsäure. Das Produkt von Beispiel 6 wird nach Methode B hergestellt. Das Produkt von Beispiel 7 wird nach Methode C hergestellt. Jeder der so hergestellten Ester wird zu gleicher Menge in Xylol, in Propylenglykolmethyletheracetat (DOWANOL® PM acetate; Dow Chemical, PMA) und in einer Xylol/PMA Mischung (1:1) gelöst und die Viskosität jeder Lösung ermittelt. Man erkennt, dass die Ester nach Methoden B und C eine geringe Lösungsviskosität besitzen. Die Resultate findet man in der folgenden Tabelle VI aufgelistet.

Tabelle VI: Lösungsviskositäten der "4"-Typ Ester der Beispiele 6-7

| Ester gemäss Beispiel | Lösungs-mittel | Feststoff-anteil (Gew.%) | Brookfield Visc. (22°C) (cP or mPa s) | Erscheinungsbild der Lösung |
|---|---|---|---|---|
| 6 | Xylol | 52,5 | 4450 | perlartig |
| 7 | Xylol | 51,4 | 2350 | perlartig |
| 6 | PMA | 50,5 | 796 | trüb |
| 7 | PMA | 50,4 | 592 | leicht trüb |
| 6 | Xylol/PMA (50/50) | 51,8 | 752 | klar |
| 7 | Xylol/PMA (50/50) | 50,9 | 522 | klar |

Löst man die Ester der Beispiele 6-7 jeweils in Xylol/PMA (1:1) auf und verdünnt die Lösungen soweit, dass jeweils dieselben Brookfield-Viskositäten erhalten werden (520 cP bzw. 520 mPa s bei 22°C), so erhält man Lösungen mit einem hohen Feststoffanteil, wenn man Ester der Verfahren B oder C verwendet. Dies ist in der folgenden Tabelle VII gezeigt.

Tabelle VII:

| Ester von Beispiel Nr. | Gew.% Feststoffanteil bei gleicher Brookfield-Viskosität |
|---|---|
| 6 | 49,3 |
| 7 | 50,8 |

Die Ester der Beispiele 6 und 7 sind daher für die Herstellung von High-Solid Lacken gut geeignet.

Um die Eigenschaften der gehärteten Harze zu ermitteln, werden die Ester der Beispiele 6 und 7 jeweils unter Einwirkung eines Melaminhärters oder eines phenolischen Resolhärtes in die gehärteten Produkte überführt. Anschliessend werden einige Eigenschaften dieser Produkte ermittelt. Die Resultate werden in der folgenden Tabelle VIII gezeigt.

Tabelle VIII: Physikalische Eigenschaften gehärteter Produkte

| Formulierung *) | 1 | 2 | 3 | 4 | 5 | 6 |
|---|---|---|---|---|---|---|
| Beispiel 6[a] | 100 | - | 100 | - | 100 | - |
| Beispiel 7[a] | - | 100 | - | 100 | - | 100 |
| Cymel® 303[b] | 12,30 | 12,70 | 5,47 | 5,64 | - | - |
| HZ® 949U[c] | - | - | - | - | 32,80 | 33,87 |
| Nacure® 155[d] | 1,12 | 1,15 | 1,00 | 1,02 | 1,19 | 1,23 |
| Verhältnis Harz/Härter | 80/20 | 80/20 | 90/10 | 90/10 | 75/25 | 75/25 |
| Bleistifthärte | 4H | 4H | 3H | 3H | 6H | 6H |
| Adhäsion[e] | sg | sg | a | a | a | a |
| Schlagfestigkeit (kg*m) | | | | | | |
| frontal: | 0,15 | 0,18 | >1,76 | >1,76 | 0,53 | 0,44 |
| rückwärtig: | 0 | 0 | >1,76 | >1,76 | 0,22 | 0,11 |
| MEK Rubs (2X)[f] | >250 | >250 | >250 | >250 | >250 | >250 |

*) Die Bestandteile der Formulierung sind jeweils in Gew.% angegeben. Die Dicke des trockenen ausgehärteten Films beträgt in jedem Falle 0,03 mm.

a) Jeder Ester wird in einer 1:1-Mischung von Xylol und PMA gelöst und soweit verdünnt, dass jeweils Lösungen von einer Viskosität von 520 mPa * s entstehen. Die einzelnen Lösungen haben dabei den in Tabelle VII angegebenen Feststoffanteil

b) Cymel® 303 ist Hexamethoxymethylmelamin (Handelsprodukt der American Cyanamid)

c) HZ® 949U ist ein Phenol-Formaldehyd Kondensat der Ciba-Geigy AG

d) Nacure® 155 ist ein blockierter Säurehärter (Handelsprodukt der King Industries)

e) sg bedeutet sehr gut; a bedeutet ausgezeichnet

f) Bei diesem Text handelt es sich um eine subjektive Untersuchung, bei der ein Tuch, das mit Methyl-ethylketon getränkt wurde, mehrmals über eine Filmoberfläche bewegt wird (Vor- und Rückbewegung). Damit kann ermittelt werden, ob ein Film ausgehärtet ist. Ein Erweichen des Films zeigt an, dass die Aushärtung nicht vollständig erfolgt ist.

Patentansprüche:

1. Zusammensetzung enthaltend

A) einen vorverlängerten linearen Epoxidharzester, der im wesentlichen keine Epoxidgruppen enthält, der im wesentlichen keine veresterten sekundären Alkoholgruppen enthält und der zu organischen Lösungen mit einer niedrigen Viskosität führt, und der die Formel I besitzt

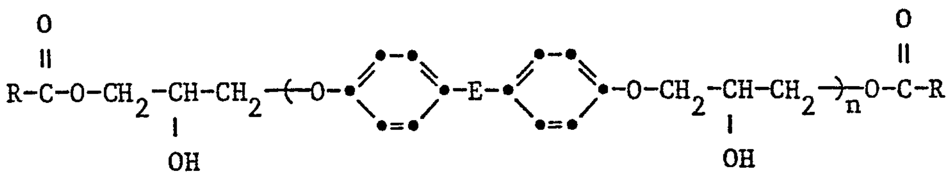

(I),

worin R der Rest einer Monocarbonsäure ist, ausgewählt aus der Gruppe bestehend aus Alkansäuren mit 6 bis 18 Kohlenstoffatomen, hydrierter Abietinsäure, Benzoesäure, p-tert.-Butylbenzoesäure, 2,2-Bis-(hydroxymethyl)-propionsäure, sowie Mischungen dieser Säuren, worin E eine direkte C-C-Bindung darstellt oder Methylen oder $C_2$-$C_6$Alkyliden ist, oder -O-, -CO-, -S-, -SO-, $-SO_2-$ oder -S-S- bedeutet, worin n eine Zahl von 3 bis 25 ist, wobei besagte Verbindung der Formel I hergestellt wird durch gleichzeitiges Umsetzen von

a) einem flüssigen Epoxidharz der Formel II

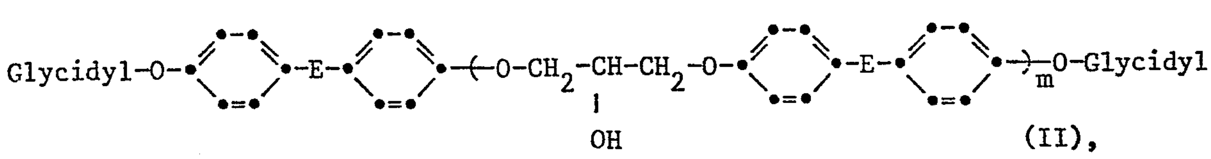

(II),

worin m 0 bis 2 bedeutet,

b) einem Bisphenol der Formel III

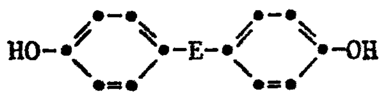 (III),

und

c) einer Monocarbonsäure oder einer Mischung von Monocarbonsäuren der Formel IV

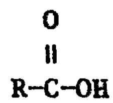 (IV),

wobei die Gesamtheit der Aequivalente des Bisphenols b) und der Säure c) im wesentlichen den Epoxidaequivalenten der Komponente a) gleichen, und worin für jeweils 1000 Gewichtsteile an Epoxidharz a) die Gewichtsteile von Bisphenol b) sich nach der Formel

$$\frac{1000 * (E_i - E_f)}{\text{Aequivalente Bisphenol/kg} + E_f}$$

berechnen, und die Gewichtsteile der Säure c) sich nach der Formel

$$\text{Aequivalentgewicht der Säure} * \frac{(1000 + \text{Gewichtsteile Bisphenol}) * E_f}{1000}$$

berechnen, wobei $E_i$ der anfängliche Epoxidwert des Epoxidharzes a) in Aequivalenten/kg ist, und wobei $E_f$ der gewünschte Epoxidwert für das vorverlängerte Produkt in Aequivalenten/kg bedeutet, wobei die Umsetzung bei Temperaturen zwischen 120 und 200°C in Gegenwart eines Katalysators durchgeführt wird, und enthaltend

B) die wirksame Menge eines Härters, der mit den sekundären Alkoholresten der Komponente A) reagiert und der ausgewählt ist aus der Gruppe bestehend aus di- und polyfunktionellen Isocyanaten, Melamin-Formaldehyd Harzen, Harnstoff-Formaldehyd Harzen und Phenol-Formaldehyd Harzen, und enthaltend

C) ein organisches Lösungsmittel.

2. Zusammensetzung gemäss Anspruch 1, worin der Rest R sich von einer $C_6$-$C_{18}$Alkansäure ableitet.

3. Zusammensetzung gemäss Anspruch 1, worin E Methylen oder Isopropyliden bedeutet.

4. Zusammensetzung gemäss Anspruch 1, worin die Herstellung des Esters der Formel I unter Verwendung eines Katalysators erfolgt, der ausgewählt wird aus der Gruppe bestehend aus Alkalimetallhydroxid, basischem Salz, Naphthenat, Zinnsalz, Imidazol oder Phosphoniumsalz.

5. Zusammensetzung gemäss Anspruch 1, worin der Katalysator für die Herstellung des Esters der Formel I in einer Menge von 0,005 bis 1 Gew.-%, bezogen auf die Epoxidharzkomponente, anwesend ist.

6. Zusammensetzungen enthaltend
A) einen vorverlängerten linearen Epoxidharzester, der im wesentlichen keine Epoxidgruppen enthält, der im wesentlichen keine veresterten sekundären Alkoholgruppen enthält und der zu organischen Lösungen mit einer niedrigen Viskosität führt, und der die Formel I besitzt

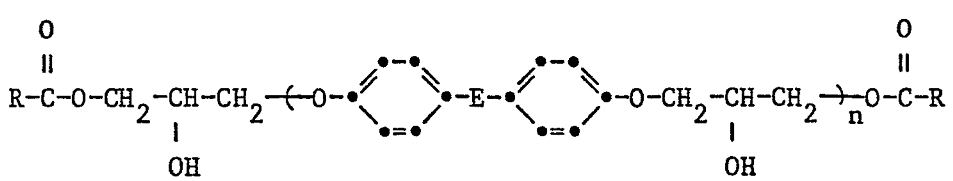 (I),

worin R der Rest einer Monocarbonsäure ist, ausgewählt aus der Gruppe bestehend aus Alkansäuren mit 6 bis 18 Kohlenstoffatomen, hydrierter Abietinsäure, Benzoesäure, p-tert.-Butylbenzoesäure, 2,2-Bis-(hydroxymethyl)-propionsäure, sowie Mischungen dieser Säuren, worin E eine direkte C-C-Bindung darstellt oder Methylen oder $C_2$-$C_6$Alkyliden ist, oder -O-, -CO-, -S-, -SO-, $-SO_2-$ oder -S-S- bedeutet, worin n eine Zahl von 3 bis 25 ist, wobei besagte Verbindung der Formel I hergestellt wird durch Umsetzen von

a) einem flüssigen Epoxidharz der Formel II

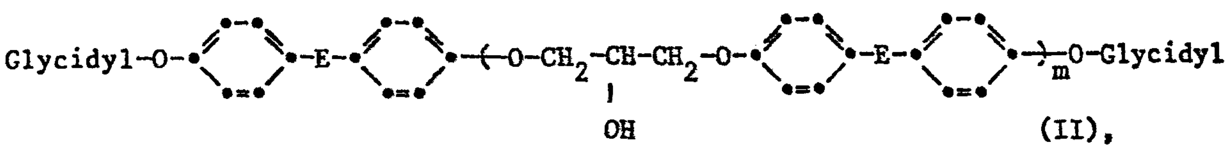

(II),

worin m 0 bis 2 bedeutet, und

b) einer Monocarbonsäure der Formel IV oder einer Mischung besagter Säuren

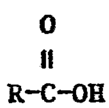

(IV),

wobei pro Epoxidaquivalent des flüssigen Epoxidharzes a) von 0,05 bis 0,5 Aequivalente der Säure IV eingesetzt werden, und wobei ein teilweise verestertes Epoxidharz entsteht, das in einer anschliessenden Reaktion mit

c) einem Bisphenol der Formel III

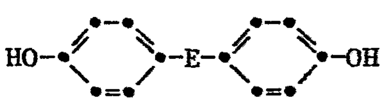

(III),

umgesetzt wird, wobei die Gesamtheit der Aequivalente der Säure b) und des Bisphenols c) im wesentlichen den Epoxidaequivalenten der Komponente a) gleichen, und worin für jeweils 1000 Gewichtsteile an Epoxidharz a) die Gewichtsteile von Bisphenol c) sich nach der Formel

$$\frac{1000 * (E_i - E_f)}{\text{Aequivalente Bisphenol/kg} + E_f}$$

berechnen, und die Gewichtsteile der Säure b) sich nach der Formel

$$\text{Aequivalentgewicht der Säure} * \frac{(1000 + \text{Gewichtsteile Bisphenol}) * E_f}{1000}$$

berechnen, wobei $E_i$ der anfängliche Epoxidwert des Epoxidharzes a) in Aequivalenten/kg ist, und wobei $E_f$ der gewünschte Epoxidwert für das vorverlängerte Produkt in Aequivalenten/kg bedeutet, wobei die Umsetzung bei Temperaturen zwischen 120 und 200°C in Gegenwart eines Katalysators durchgeführt wird, und enthaltend

B) die wirksame Menge eines Härters, der mit den sekundären Alkoholresten der Komponente A) reagiert und der ausgewählt ist aus der Gruppe bestehend aus di- und polyfunktionellen Isocyanaten, Melamin-Formaldehyd Harzen, Harnstoff-Formaldehyd Harzen und Phenol-Formaldehyd Harzen, und enthaltend

C) ein organisches Lösungsmittel.

7. Zusammensetzung gemäss Anspruch 6, worin der Rest R sich von einer $C_6$-$C_{18}$Alkansäure ableitet.

8. Zusammensetzung gemäss Anspruch 6, worin E Methylen oder Isopropyliden bedeutet.

9. Zusammensetzung gemäss Anspruch 6, worin die Herstellung des Esters der Formel I unter Verwendung eines Katalysators erfolgt, der ausgewählt wird aus der Gruppe bestehend aus Alkalimetallhydroxid, basischem Salz, Naphthenat, Zinnsalz, Imidazol oder Phosphoniumsalz.

10. Zusammensetzung gemäss Anspruch 1, worin der Katalysator für die Herstellung des Esters der Formel I in einer Menge von 0,005 bis 1 Gew.%, bezogen auf die Epoxiharzkomponente, anwesend ist.

11. Verfahren zum Aufbringen einer thermoplastischen Strassenmarkierungsfarbe umfassend folgende Verfahrensschritte:

I) Erhitzen eines vorverlängerten linearen Epoxidharzesters, auf eine Temperatur oberhalb seines Schmelzpunktes, wobei besagter Ester im wesentlichen keine Epoxidgruppen und im wesentlichen keine veresterten sekundären Alkoholgruppen enthält, wobei besagter Ester die Formel I besitzt

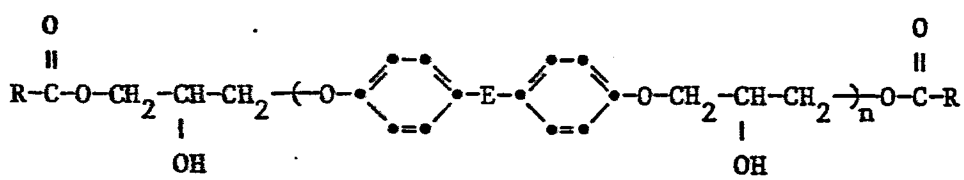

(I),

worin R der Rest einer Monocarbonsäure ist, ausgewählt aus der Gruppe bestehend aus Alkansäuren mit 6 bis 18 Kohlenstoffatomen, hydrierter Abietinsäure, Benzoesäure, p-tert.-Butylbenzoesäure, 2,2-Bis-(hydroxymethyl)-propionsäure, sowie Mischungen dieser Säuren, worin E eine direkte C-C-Bindung darstellt oder Methylen oder $C_2$-$C_6$Alkyliden ist, oder -O-, -CO-, -S-, -SO-, $-SO_2-$ oder -S-S- bedeutet, worin n eine Zahl von 3 bis 25 ist, wobei besagte Verbindung der Formel I hergestellt wird durch gleichzeitiges Umsetzen von

a) einem flüssigen Epoxidharz der Formel II

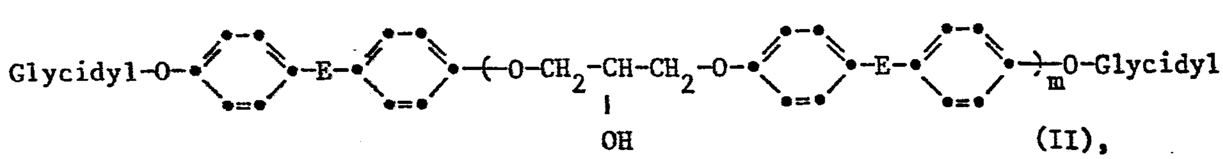

(II),

worin m 0 bis 2 bedeutet,

b) einem Bisphenol der Formel III

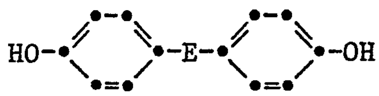 (III),

und

c) einer Monocarbonsäure oder einer Mischung von Monocarbonsäuren der Formel IV

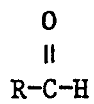 (IV),

wobei die Gesamtheit der Aequivalente des Bisphenols b) und der Säure c) im wesentlichen den Epoxidaequivalenten der Komponente a) gleichen, und worin für jeweils 1000 Gewichtsteile an Epoxidharz a) die Gewichtsteile von Bisphenol b) sich nach der Formel

$$\frac{1000 * (E_i - E_f)}{\text{Aequivalente Bisphenol/kg} + E_f}$$

berechnen, und die Gewichtsteile der Säure c) sich nach der Formel

$$\text{Aequivalentgewicht der Säure} * \frac{(1000 + \text{Gewichtsteile Bisphenol}) * E_f}{1000}$$

berechnen, wobei $E_i$ der anfängliche Epoxidwert des Epoxidharzes a) in Aequivalenten/kg ist, und wobei $E_f$ der gewünschte Epoxidwert für das vorverlängerte Produkt in Aequivalenten/kg bedeutet, wobei die Umsetzung bei Temperaturen zwischen 120 und 200°C in Gegenwart eines Katalysators durchgeführt wird; und

II) Halten besagten thermoplastischen Esters in geschmolzenem Zustand für längere Zeit auf erhöhter Temperatur, wobei keine weitere Vorverlängerung oder Gelierung besagten Esters erfolgt, und

III) Aufbringen des thermoplastischen Esters in geschmolzenem Zustand auf die Strassenoberfläche.

12. Verfahren zum Aufbringen einer thermoplastischen Strassenmarkierungsfarbe umfassend folgende Verfahrensschritte:
I) Erhitzen eines vorverlängerten linearen Epoxidharzesters auf eine Temperatur oberhalb seines Schmelzpunktes, wobei besagter Ester im wesentlichen keine Epoxidgruppen und im wesentlichen keine veresterten sekundären Alkoholgruppen enthält, wobei besagter Ester die Formel I besitzt

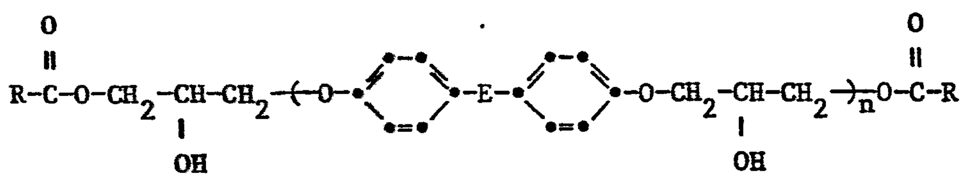

(I),

worin R der Rest einer Monocarbonsäure ist, ausgewählt aus der Gruppe bestehend aus Alkansäuren mit 6 bis 18 Kohlenstoffatomen, hydrierter Abietinsäure, Benzoesäure, p- tert.-Butylbenzoesäure, 2,2-Bis-(hydroxymethyl)-propionsäure, sowie Mischungen dieser Säuren, worin E eine direkte C-C-Bindung darstellt oder Methylen oder $C_2$-$C_6$-Alkyliden ist, oder -O-, -CO-, -S-, -SO-, $-SO_2-$ oder -S-S- bedeutet, worin n eine Zahl von 3 bis 25 ist, wobei besagte Verbindung der Formel I hergestellt wird durch Umsetzen von
a) einem flüssigen Epoxidharz der Formel II

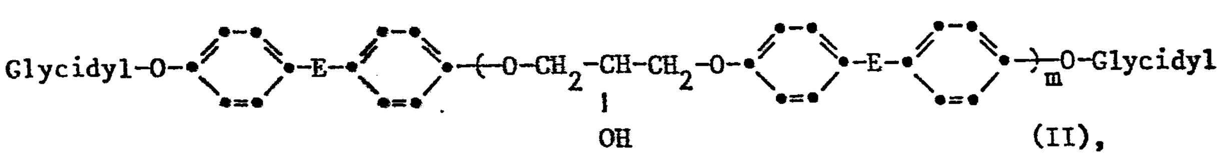

(II),

worin m 0 bis 2 bedeutet, und

b) einer Monocarbonsäure der Formel IV oder einer Mischung besagter Säuren

$$R-\overset{\overset{O}{\|}}{C}-OH \qquad (IV),$$

wobei pro Epoxidaequivalent des flüssigen Epoxidharzes a) von 0.05 bis 0,5 Aequivalente der Säure IV eingesetzt werden, und wobei ein teilweise verestertes Epoxidharz entsteht, das in einer anschliessenden Reaktion mit

c) einem Bisphenol der Formel III

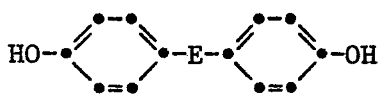

(III),

umgesetzt wird, wobei die Gesamtheit der Aequivalente der Säure b) und des Bisphenols c) im wesentlichen den Epoxidaequivalenten der Komponente a) gleichen, und worin für jeweils 1000 Gewichtsteile an Epoxidharz a) die Gewichtsteile von Bisphenol c) sich nach der Formel

$$\frac{1000 * (E_i - E_f)}{\text{Aequivalente Bisphenol/kg} + E_f}$$

berechnen, und die Gewichtsteile der Säure b) sich nach Formel

$$\text{Aequivalentgewicht der Säure} * \frac{(1000 + \text{Gewichtsteile Bisphenol}) * E_f}{1000}$$

berechnen, wobei $E_i$ der anfängliche Epoxidwert des Epoxidharzes a) in Aequivalenten/kg ist, und wobei $E_f$ der gewünschte Epoxidwert für das vorverlängerte Produkt in Aequivalenten/kg bedeutet, wobei die Umsetzung bei Temperaturen zwischen 120 und 200°C in Gegenwart eines Katalysators durchgeführt wird; und

II) Halten besagten thermoplastischen Esters in geschmolzenem Zustand für längere Zeit auf erhöhter Temperatur, wobei keine weitere Vorverlängerung oder Gelierung besagten Esters erfolgt, und

III) Aufbringen des thermoplastischen Esters in geschmolzenem Zustand auf die Strassenoberfläche.

FO 7.1 ACK/rn*/hc*